# EUROPEAN PATENT APPLICATION

(11) **EP 4 219 986 A1**
(43) Date of publication of application: **02.08.2023**
(21) Application number: 22154265.7
(22) Date of filing: 31.01.2022
(51) Int. Cl.: F16K 11/04, F16K 11/06, F24D 19/00, F24H 9/00

(54) **3-WAY FLUID VALVE, APPLIANCE FOR HANDLING A FLUID FLOW HAVING A 3-WAY FLUID VALVE AND WATER HEATER HAVING A 3-WAY FLUID VALVE AND METHODS TO OPERATE THE SAME**

(71) Applicant: Pittway Sarl, 1180 Rolle (CH)
(72) Inventor: DEPTOLLA, Uwe, 49504 Lotte (DE); MICHALEK, Dusan, 61500 Brno (CZ)
(74) Representative: Sturm, Christoph

(57) **Abstract**

3-way fluid valve (30), having a housing (31) providing a first connection port (32), a second connection port (33) and a third connection port (34), a valve plunger (35) 5 positioned within the housing (31), an actuator (36) for actuating the valve plunger (35) and for transferring the valve plunger (35) and thereby the 3-way fluid valve(30) between different states, wherein in a first state of the valve plunger (35) and 3-way fluid valve (30) a fluid flow through the first connection port (32) and throughthe second connection port (33) and through the third connection port (34) are all 10 blocked, wherein in a second state of the valve plunger (35) and 3-wayfluid valve (30) only a fluid flow through the first connection port (32) is blocked allowing a fluid flow from the second connection port (33) to the third connection port (34), wherein in a third state of the valve plunger (35) and 3-way fluid valve (30) only a fluid flow through third connection port (34) is blocked allowing a fluid flow from the first con-15 nection port (32) to the second connection port (33).

## Description

The invention relates to a 3-way fluid valve, to an appliance for handling a fluid flow having a 3-way fluid valve, to a water heater having a 3-way fluid valve and to methods for operating the same.

EP 1 063 481 B1 discloses a water heater comprising a gas burner being configured to combust gas if a heat demand is present, comprising a heat exchanger being configured to heat water using the thermal energy provided with the combustion of the gas, further comprising an input pipe being configured to provide water to be heated to the heat exchanger, further comprising an output pipe being configured to provide water heated by the heat exchanger to the at least one water consumer, and further comprising a connecting pipe, namely a bypass pipe, extending between the input pipe and the output pipe. The gas burner comprises a burner chamber in which the combustion of the gas takes place. The gas burner further comprises a gas armature providing the gas to be combusted to the burner chamber. Both, the burner chamber and the gas armature from part of the gas burner.

US 4 922 861 A, US 7 298 968 B1 and US 10 883 743 B2 disclose other water heaters according to the prior art.

The gas burner of a water heater, especially the gas armature of the gas burner, needs to be calibrated from time to time. For performing a calibration of the gas burner, the gas burner needs to be operated at a defined calibration burner load for a defined calibration time interval. For water heaters according to the prior art, such a calibration of the gas burner can only be executed when a heat demand is present, namely if heated water is requested by at least one water consumer. Depending on the heat demand of the at least one water consumer, the operation of the gas burner at the defined calibration burner load for the defined calibration time interval can lead to a water temperature at the respective water consumer being either too high or too low. This is a significant disadvantage of water heaters known from prior art.

It is desired to execute a calibration of the water heater even if there is no heat demand by a water consumer.

JP 2014 062 559 A discloses a diverting or mixing 3-way valve.

JP 2013 249 860 A discloses a 4-port valve.

CN 213 687 317 U discloses a 3-way diverting valve for water heaters.

Against this background, a novel 3-way fluid valve and a novel water heater comprising said novel 3-way fluid valve are provided. The novel 3-way fluid valve is also applicable and of advantage for other appliances handling a fluid flow like a water flow. So, further a novel appliance for handling a fluid flow comprising the novel 3-way fluid valve is provided. Further, methods to operate the appliance and the water heater are provided.

The invention provides a 3-way fluid valve according to claim 1.

The novel 3-way fluid valve comprises a housing providing a first connection port, a second connection port and a third connection port. The novel 3-way fluid valve comprises further a valve plunger positioned within the housing and an actuator for actuating the valve plunger and for transferring the valve plunger and thereby the 3-way fluid valve between different states.

In a first state of the valve plunger and 3-way fluid valve, a fluid flow through the first connection port and through the second connection port and through the third connection port are all blocked. In a second state of the valve plunger and 3-way fluid valve, only a fluid flow through the first connection port is blocked allowing a fluid flow from the second connection port to the third connection port. In a third state of the valve plunger and 3-way fluid valve, only a fluid flow through third connection port is blocked allowing a fluid flow from the first connection port to the second connection port.

Under operation conditions of the novel 3-way fluid valve, a first pressure being present at the first connection port is larger than a second pressure being present at the second connection port, wherein the second pressure being present at the second connection port is larger than a third pressure being present at the third connection port.

In connection with a water heater, the novel 3-way fluid valve allows a calibration and descaling of the water heater even if no heat demand is present, as well as standard water heater operation.

Preferably, the first connection port is provided by a first section of the housing, the second connection port is provided by a second section of the housing, and the third connection port is provided by a third section of the housing, wherein the second section of housing and thereby the second connection port is positioned between the first section of the housing and the third section of the housing.

The valve plunger is configured such that in the first state of the valve plunger and 3-way fluid valve the valve plunger blocks a fluid flow from the first connection port to the second connection port and blocks a fluid flow from the second connection port to the third connection port and blocks a fluid flow from the first connection port to the third connection port. The valve plunger is further configured such that in the second state of the valve plunger and 3-way fluid valve the valve plunger blocks a fluid flow from the first connection port to the second connection port and blocks a fluid flow from the first connection port to the third connection port while allowing the fluid flow from the second connection port to the third connection port. The valve plunger is further configured such that in the third state of the valve plunger and 3-way fluid valve the valve plunger blocks a fluid flow from the first connection port to the third connection port and blocks a fluid flow from the second connection port to the third connection port while allowing the fluid flow from the first connection port to the second connection port. Such a 3-way valve is simple and reliable providing example given the above functions desired for the operation of water heaters.

The valve plunger is configured to modulate the respective fluid flow in such a manner that the amount of the respective fluid flow is a function of, preferably proportional to, the position of the valve plunger. This allows in addition proportional mixing of inlet water and outlet water of the water heater.

The actuator may move the valve plunger in a linear direction and/or in a rotational direction.

The invention further provides an appliance for handling a fluid flow according to claim 9. A method to operate said appliance is defined in claim 11.

The invention further provides a water heater according to claim 12. A method to operate said water heater is defined in claim 15.

The water heater can be operated with the gas burner combusting gas even if there is no heat demand by a water consumer. Calibrations of the water heater can be executed even if there is no heat demand by a water consumer. The water heated by the water heater during such a calibration can be guided to the siphon or trap.

Preferred developments of the invention are provided by the dependent claims and the description which follows. Exemplary embodiments are explained in more detail on the basis of the drawing, in which:
- Figure 1: shows a 3-way fluid valve according to the present invention in a first state,
- Figure 2: shows the 3-way fluid valve of figure 1 in a second state,
- Figure 3: shows the 3-way fluid valve of figures 1 and 2 in a third state, and
- Figure 4: shows a water heater according to the present invention a preferred application of the -way fluid valve according to the invention.

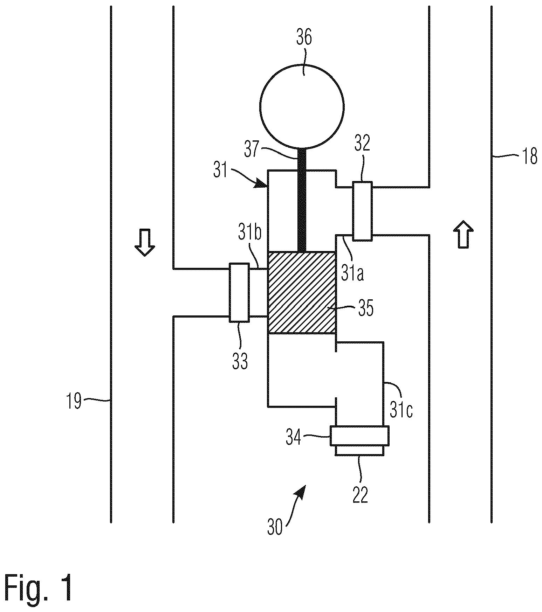

Figures 1 to 3 shows an appliance for handling a fluid flow having a 3-way fluid valve 30 according to the present invention in three different states of the 3-way fluid valve 30. The 3-way fluid valve 30 is hereinafter also called 3-way-valve 30.

The 3-way fluid valve 30 has a housing 31 providing a first connection port 32, a second connection port 33 and a third connection port 34. The 3-way fluid valve 30 has further a valve plunger 35 positioned within the housing 31, and an actuator 36 for actuating the valve plunger 35 and for transferring the valve plunger 35 and thereby the 3-way-valve 30 between different states.

The first port 32 of the 3-way-valve 30 is connected to a first pipe 18 of the appliance for handling the fluid flow, the second port 33 of the 3-way-valve 30 is connected to a second pipe 19 of the appliance for handling the fluid flow, and the third port 34 of the 3-way-valve 30 is connected to a drain 22 of the appliance for handling the fluid flow.

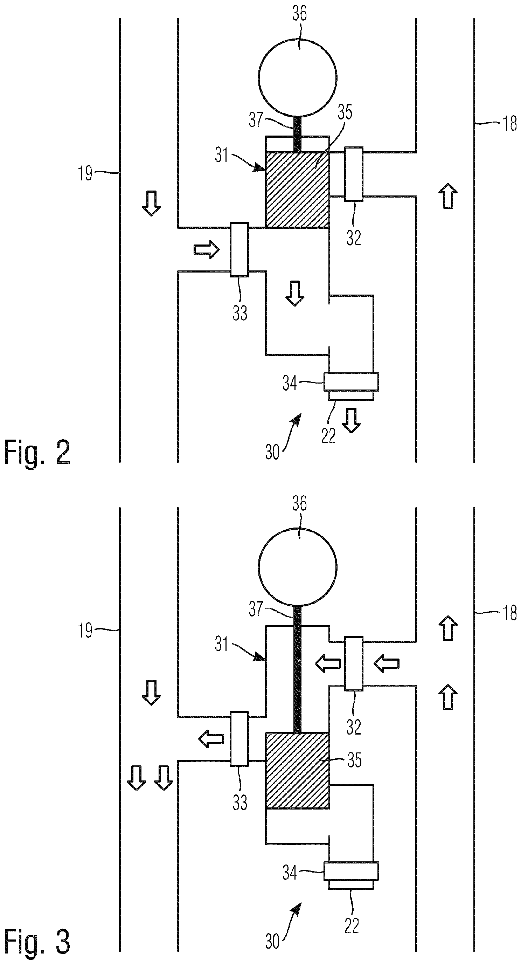

In a first state of the valve plunger 35 and 3-way-valve 30 (see Figure 1) a fluid flow through the first connection port 32 and a fluid flow through the second connection port 33 and a fluid flow through the third connection port 34 are all blocked. In a second state of the valve plunger 35 and 3-way-valve 30 (see Figure 2) only a fluid flow through the first connection port 32 is blocked allowing a fluid flow from the second connection port 33 to the third connection port 34. In a third state of the valve plunger 35 and 3-way-valve 30 (see Figure 3) only a fluid flow through third connection port 34 is blocked allowing a fluid flow from the first connection port 32 to the second connection port 33.

A first pressure being present at the first connection port 32 under operation conditions of the appliance and 3-way fluid valve 30 is larger than a second pressure being present at the second connection port 33 under operation conditions. The second pressure being present at the second connection port 33 under operation conditions is larger than a third pressure being present at the third connection port 34 under operation conditions.

The first connection port 32 of the 3-way fluid valve 30 is provided by a first section 31a of the housing 31. The second connection port 33 of the 3-way fluid valve 30 is provided by a second section 31b of the housing 31. The third connection port 34 of the 3-way fluid valve 30 is provided by a third section 31c of the housing 31. The second section 31b of the housing 31 and thereby the second connection port 33 is positioned between the first section 31a of the housing and the third section 31c of the housing 32.

The 3-way fluid valve 30, namely the valve plunger 35 of the same, is configured such that in the first state of the valve plunger 35 and 3-way-valve 30 (see Figure 1) the valve plunger 35 blocks a fluid flow from the first connection port 32 to the second connection port 33 and blocks a fluid flow from the second connection port 33 to the third connection port 34 and blocks a fluid flow from the first connection port 32 to the third connection port 34. So, in the first state of the 3-way-valve 30 there is no fluid flow through the 3-way fluid valve 30.

The 3-way fluid valve 30, namely the valve plunger 35, is further configured such that in the second state of the valve plunger 35 and 3-way-valve 30 (see Figure 2) the valve plunger 35 blocks a fluid flow from the first connection port 32 to the second connection port 33 and blocks a fluid flow from the first connection port 32 to the third connection port 34 allowing a fluid flow from the second connection port 33 to the third connection port 34. So, in the second state of the 3-way-valve 30 there is a fluid flow through the 3-way fluid valve 30 from the second connection port 33 to the third connection port 34 and thereby from the second pipe 19 to the drain 22.

The 3-way fluid valve 30, namely the valve plunger 35 of the same, is further configured such that in the third state of the valve plunger 35 and 3-way-valve 30 (see Figure 3) the valve plunger 35 blocks a fluid flow from the first connection port 32 to the third connection port 34 and from the second connection port 33 to the third connection port 34 allowing the fluid flow from the first connection port 32 to the second connection port 33. So, in the third state of the 3-way-valve 30 there is a fluid flow through the 3-way fluid valve 30 from the first connection port 32 to the second connection port 33 and thereby from the first pipe 18 to the second pipe 19.

The valve plunger 35 may be configured to modulate the respective fluid flow from the second connection port 33 to the third connection port 34 (Figure 2) and/or to modulate the respective fluid flow the first connection port 32 to the second connection port 33 (Figure 3) in such a manner that the amount of the respective fluid flow is a function of the position of the valve plunger 35.

Preferably, the amount of the respective fluid flow may be proportional to the position of the valve plunger 35.

In the embodiment of Figures 1 to 3, the actuator 36 moves the valve plunger 35 of the 3-way fluid valve 30 in a linear direction though a shaft 37 to which the valve plunger 35 is mounted.

Alternatively, or in addition to the linear movement of the valve plunger 35, the actuator 36 may move the valve plunger 35 in a rotational direction. There may be a linear movement superimposed with a rotational movement of the valve plunger 35.

The 3-way fluid valve 30 is transferred into the first state if no fluid flow through the same is wanted. The 3-way fluid valve 30 is transferred into the second state if fluid flow from the second pipe 19 to the drain 22 is wanted. The 3-way fluid valve 30 is transferred into the third state if fluid flow from the first pipe 18 to second pipe 19 is wanted. This is done by the actuator 36 which moves the valve plunger 35.

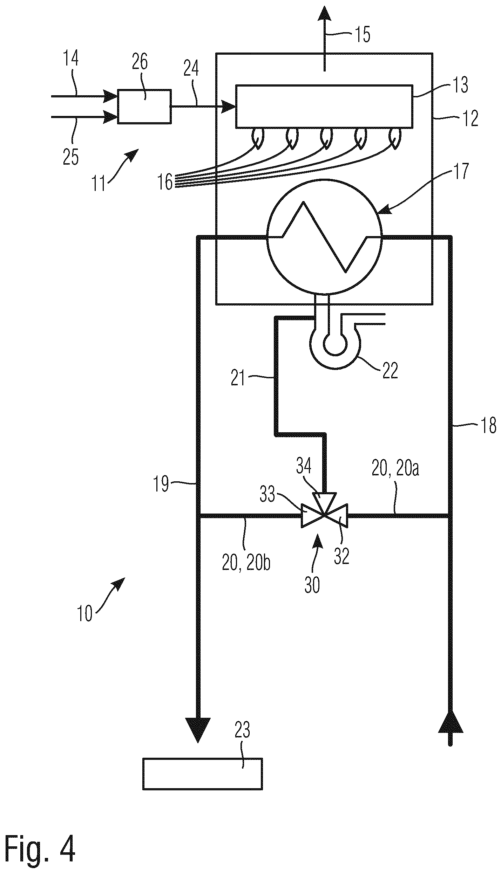

Figure 4 illustrates the preferred use of the application of the 3-way fluid valve 30 in connection with an appliance provided as water heater 10.

The water heater 10 comprises a gas burner 11 being configured to combust a gas if a heat demand is present, namely if heated water is requested by at least one water consumer 23.

The gas burner comprises 11 a burner chamber 12. A burner rod 13 of the gas burner 11 is positioned within the burner chamber 11.

Gas 14 is provided to the burner rod 13 for combusting the gas 14 within the burner chamber 12. The gas 14 is preferably provided as a gas/air mixture 24. The combustion of the gas 14 of gas/air mixture 24 results into flames 16 and exhaust gas 15. The exhaust gas 15 emerges from the burner chamber 12 through a chimney.

As mentioned above, the gas 14 is preferably provided as a gas/air mixture 24. Such a gas/air mixture 24 is usually provided by a gas armature 26 of the gas burner 11. Such gas armatures 26 are well known. Such a gas armature 26 usually comprises a fan (not shown) providing a flow of air 25, a gas valve or gas modulator (not shown) providing a flow of the gas 14 and a mixing unit (not shown) mixing the air flow with the gas flow. The mixing ratio of gas 14 and air 25 within the gas/air mixture 24 is usually kept at a defined value over the entire modulation rage of the gas burner 11 such that at any burner load of the gas burner 11 the mixing ratio of the gas/air mixture 24 is kept at the defined value.

The water heater 10 further comprises a heat exchanger 17 being configured to heat water using the thermal energy provided with the combustion of the gas 14. The heat exchanger 17 is positioned inside the burner chamber 12. The heat exchanger 17 is a condensing heat exchanger.

The water heater 10 further comprises a first pipe 18, namely an input pipe 18, being configured to provide unheated water, namely water to be heated by the heat exchanger 17, to the heat exchanger 17.

The water heater 10 further comprises a second pipe 19, namely an output pipe 19, being configured to provide water heated by the heat exchanger 17 to the at least one water consumer 23.

The water heater 10 further comprises a drain 22, namely a siphon or trap 22, being configured to collect condensate resulting at the condensing heat exchanger 17 during operation of the water heater 10.

The water heater 10 further comprises a first connecting pipe 20, a second connecting pipe 21 and the 3-way fluid valve 30 of the present invention. The first connecting pipe 20 extends between the input pipe 18 and the output pipe 19. The first connecting pipe 20 may also be called bypass pipe. The second connecting pipe 21 extends between the first connecting pipe 20 and the siphon or trap 22.

The water heater 10 comprises the 3-way fluid valve 30 connected between the first connecting pipe 20 and the second connecting pipe 21. Said 3-way fluid valve 30 is configured to guide water heated by heat exchanger 17 from the output pipe 19 to the siphon or trap 22, and to guide water unheated by the heat exchanger 17 but flowing through the same from the output pipe 19 to the siphon or trap 22. This can be done even if no heat demand is present, namely if heated water is not requested by the at least one water consumer 23.

Said 3-way fluid valve 30 is also configured to guide unheated water bypassing the heat exchanger 17 from the input pipe 18 to the second pipe 19. The unheated water bypassing the heat exchanger 17 can then be mixed with water heated by the heat exchanger 17.

The first port 32 of the 3-way-valve 30 is connected to input pipe 18 through a first section 20a of the first connecting pipe 20. The second port 33 of the 3-way-valve 30 is connected to output pipe 19 through a second section 20b of the first connecting pipe 20. The third port 34 of the 3-way-valve 30 is connected to the siphon or trap 22 through the second connecting pipe 21.

If a heat demand is present at the water heater 10 of Figure 4, namely if heated water is requested by the at least one water consumer 23, the input pipe 18 provides water to the heat exchanger 17, said water becomes heated by the heat exchanger 17 when flowing through the same using the thermal energy resulting from the combustion of the gas 14 by the gas burner 11, and the water heated by the heat exchanger 17 is provided to the respective water consumer 23. In this situation the 3-way fluid valve 30 may be in the first state of Figure 1 or in the third state of Figure 3.

If the 3-way fluid valve 30 is in the first state of Figure 1, only water heated by the heat exchanger 17 is provided to the respective water consumer 23 od the water heater of Figure 4.

If the 3-way fluid valve 30 is in the third state of Figure 3, the water heated by the heat exchanger 17 becomes mixed with unheated water bypassing the heat exchanger 17 and said mixture is provided to the respective water consumer 23. Said mixture can be used to control the temperature of the water provided to the consumer 23.

If a heat demand is not present at the water heater 10 of Figure 4, namely if heated water is not requested by the at least one water consumer 24, the gas burner 11 may be active and may combust gas 14 or may inactive and may not combust gas 14.

If a heat demand is not present and if the gas burner 11 of the water heater 10 of Figure 4 is combusting gas 14, water heated by the heat exchanger 17 can be provided to the siphon or trap 22 from the output pipe 19 through the second section 20b of first connecting pipe 20, through the 3-way valve 30 and through the second connecting pipe 21. The 3-way valve is then in the second state of Figure 2.

If a heat demand is not present and if the gas burner 11 of the water heater of Fig- ure 4 is not combusting gas 14, water not being heated by the heat exchanger 17 but flowing through the same can be provided to the siphon or trap 22 from the output pipe 19 through the second section 20b of first connecting pipe 20, through the 3-way valve 30 and through the second connecting pipe 21. The 3-way valve is then also in the second state of Figure 2.

So, heated water as well as unheated water can be provided to the siphon or trap 22 without any water consumption at a water consumer 23.

If no heat demand is present, namely if heated water is not requested by the at least one water consumer 23, for a calibration of the gas burner 11 of the water heater 10 of Figure 4, the water heater 10 is operated as follows: The gas burner 11 is operated at a defined calibration burner load for a defined calibration time interval and the water heated by the heat exchanger 17 during the calibration is provided by the 3-way fluid valve 30 to the siphon or trap 22. During the calibration, the heated water is provided by the 3-way fluid valve 30 to the siphon or trap 22 from the output pipe 19, namely in such a way that the heater water flows from the output pipe 19 through the second section 20b of the first connecting pipe 20, through the 3-way fluid valve 30 and through the second connection pipe 21 to the siphon or trap 22.

If no heat demand is present, namely if heated water is not requested by the at least one water consumer 23, for a filling the siphon or trap 22 directly after installation of the water heater 10 of Figure 4, the water heater 10 is operated as follows: Unheated water or heated water is provided by the 3-way fluid valve 30 to the siphon or trap 22. The unheated water or the heated water is provided by the 3-way fluid valve 30 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the 3-way fluid valve 30 to the siphon or trap 22 from the output pipe 19, such that the water flows from the output pipe 19 through the second section 20b of the first connecting pipe 20, through the 3-way fluid valve 30 and through the second connection pipe 21 to the siphon or trap 22.

If no heat demand is present, namely if heated water is not requested by the at least one water consumer 23, for a cleaning the siphon or trap 22 the water heater 10 of Figure 4 is operated as follows: Unheated water or heated water is provided by the 3-way fluid valve 30 to the siphon or trap 22. The unheated water or the heated water is provided by the 3-way fluid valve 30 to the siphon or trap 22 from the output pipe 19. To provide heated water to the siphon or trap 22, the gas burner 11 is combusting gas 14 at a defined burner load. To provide unheated water to the siphon or trap 22, the gas burner 11 is not combusting gas 14. The heated water or the unheated water is provided by the 3-way fluid valve 30 to the siphon or trap 22 from the output pipe 19, namely in such a way that the water flows from the output pipe 19 through the second section 20b of the first connecting pipe 20, through the 3-way fluid valve 30 and through the second connection pipe 21 to the siphon or trap 22.

If no heat demand is present, namely if heated water is not requested by the at least one water consumer 23, for a descaling of the heat exchanger 17 the water heater 10 of Figure 4 is operated as follows. The following steps i) and ii) are alternately executed. Step i): Combust gas with the gas burner 11 at a defined burner load for a defined first time interval and provide the heated water to the siphon or trap 22. Step ii): Stop combustion of gas within the gas burner 11 for a defined second time interval and provide the unheated water to the siphon or trap 22.

If no heat demand is present, namely if heated water is not re-quested by the at least one water consumer 23, for a descaling of the heat exchanger 17 the water heater 10 of Figure 4 is alternatively operated as follows. The following steps i) and ii) are alternately executed. Step i): Combust gas with the gas burner 11 at a defined first burner load for a defined first time interval and provide the heated water to the siphon or trap 22. Step ii) combust gas with the gas burner 11 at a defined second burner load for a defined second time interval and provide the heated water to the siphon or trap 22, wherein the first burner load is relatively low compared to the second burner load. The first burner load may be a minimum burner load and the second burner load may be a maximum burner load.

For the descaling of the heat exchanger 17 of the water heater 10 of Figure 4, during the first time interval and during the second time interval the water is provided from the output pipe 19 to the siphon or trap 22 through the 3-way fluid valve 30, namely in such a way that the water flows from the output pipe 19 through the second section 20b of the first connecting pipe 20, through the 3-way fluid valve 30 and through the second connection pipe 21 to the siphon or trap 22.

If in Figure 4 water flows from output pipe 19 through the second section 20b of the first connecting pipe 20, through the 3-way fluid valve 30 and through the second connection pipe 21 to the siphon or trap 22, the 3-way fluid valve 30 is in its second state according to Figure 2.

### List of reference signs

- 10: water heater
- 11: gas burner
- 12: combustion camber
- 13: burner rod
- 14: gas or gas/air mixture
- 15: exhaust gas
- 16: flame
- 17: heat exchanger
- 18: first pipe or input pipe
- 19: second pipe or output pipe
- 20: first connecting pipe
- 20a: first section
- 20b: second section
- 21: second connecting pipe
- 22: drain, siphon or trap
- 23: water consumer
- 24: gas/air mixture
- 25: air
- 26: gas armature
- 30: 3-way fluid valve
- 31: housing
- 31a: first section
- 31b: second section
- 31c: third section
- 32: first valve port
- 33: second valve port
- 34: third valve port
- 35: valve plunger
- 36: actuator
- 37: shaft

## Claims

1. 3-way fluid valve (30), having
a housing (31) providing a first connection port (32), a second connection port (33) and a third connection port (34),
a valve plunger (35) positioned within the housing (31),
an actuator (36) for actuating the valve plunger (35) and for transferring the valve plunger (35) and thereby the 3-way fluid valve (30) between different states,
wherein in a first state of the valve plunger (35) and 3-way fluid valve (30), a fluid flow through the first connection port (32) and through the second connection port (33) and through the third connection port (34) are all blocked,
wherein in a second state of the valve plunger (35) and 3-way fluid valve (30), only a fluid flow through the first connection port (32) is blocked allowing a fluid flow from the second connection port (33) to the third connection port (34),
wherein in a third state of the valve plunger (35) and 3-way fluid valve (30), only a fluid flow through third connection port (34) is blocked allowing a fluid flow from the first connection port (32) to the second connection port (33).

2. 3-way fluid valve according to claim 1, wherein
wherein a first pressure being present at the first connection port (32) is larger than a second pressure being present at the second connection port (33),
wherein the second pressure being present at the second connection port (33) is larger than a third pressure being present at the third connection port (34).

3. 3-way fluid valve according to claim 1 or 2, wherein the valve plunger (35) is configured to modulate the respective fluid flow in such a manner that the amount of the respective fluid flow is a function of the position of the valve plunger (35).

4. 3-way fluid valve according to claim 3, wherein the valve plunger (35) is configured to modulate the respective fluid flow in such a manner that the amount of the respective fluid flow is proportional to the position of the valve plunger (35).

5. 3-way fluid valve according to one of claims 1 to 4 wherein
the first connection port (32) is provided by a first section (31a) of the housing (31),
the second connection port (33) is provided by a second section (31b) of the housing (31),
the third connection port (34) is provided by a third section (31c) of the housing (31),
the second section (31b) of housing (31) and thereby the second connection port (33) is positioned between the first section (31a) of the housing and the third section (31c) of the housing (32).

6. 3-way fluid valve according to claims 1 to 5, wherein the valve plunger (35) is configured such that
in the first state of the valve plunger (35) and 3-way fluid valve (30) the valve plunger (35) blocks a fluid flow from the first connection port (32) to the second connection port (33) and from the second connection port (33) to the third connection port (34) and from the first connection port (32) to the third connection port (34);
in the second state of the valve plunger (35) and 3-way fluid valve (30) the valve plunger (35) blocks a fluid flow from first the first connection port (32) to the second connection port (33) and from the first connection port (32) to the third connection port (34) allowing the fluid flow from the second connection port (33) to the third connection port (34),
in the third state of the valve plunger (35) and 3-way fluidvalve (30) the valve plunger (35) blocks a fluid flow from the first connection port (32) to the third connection port (34) and from the second connection port (33) to the third connection port (34) allowing the fluid flow from the first connection port (32) to the second connection port (33).

7. 3-way fluid valve according to one of claims 1 to 6, wherein the actuator (36) moves the valve plunger (35) in a linear direction.

8. 3-way fluid valve according to one of claims 1 to 7, wherein the actuator (36) moves the valve plunger (35) in a rotational direction.

9. Appliance for handling a fluid flow, comprising:
a first pipe (18) to guide a first flow of the fluid,
a second pipe (19) to guide a second flow of the fluid,
a drain (22),
a 3-way fluid valve (30) according to one of claims 1 to 8,
wherein the first port (32) of the 3-way fluid valve (30) is connected to the first pipe (18),
wherein the second port (33) of the 3-way fluid valve (30) is connected to the second pipe (19), and
wherein a third port (34) of the 3-way fluid valve (30) is connected to the drain (22).

10. Appliance of claim 9, wherein the 3-way fluid valve (30) is configured to
guide fluid from the first pipe (18) in which a first pressure is present to the second pipe (19) in which a second pressure is present, and
guide fluid from the second pipe (19) in which the second pressure is present to the drain (22) at which a third pressure is present,
wherein the first pressure is larger than the second pressure,
wherein the second pressure is larger than the third pressure.

11. Method to operate an appliance according to claim 9 or 10, wherein
the 3-way fluid valve (30) is transferred into the first state if no fluid flow through the same is wanted,
the 3-way fluid valve (30) is transferred into the second state if fluid flow from the second pipe (19) to the drain (22) is wanted,
the 3-way fluid valve (30) is transferred into the third state if fluid flow from the first pipe (18) to second pipe (19) is wanted.

12. Water heater (10), comprising:
a gas burner (11) being configured to combust gas if a heat demand is present, namely if heated water is requested by at least one water consumer (24),
a heat exchanger (17) being configured to heat water using the thermal energy provided with the combustion of the gas, wherein the heat exchanger (17) is a condensing heat exchanger,
an input pipe (18) being configured to provide water to be heated to the heat exchanger (17),
an output pipe (19) being configured to provide water heated by the heat exchanger (17) to the at least one water consumer (23),
a siphon or trap (22) being configured to collect condensate resulting at the condensing heat exchanger (17) during operation of the water heater (10),
a first connection pipe (20) extending between the input pipe (18) and the output pipe (19),
a second connecting pipe (21) extending between the first connecting pipe (20) and the siphon or trap (22),
a 3-way fluid valve (30) according to one of claims 1 to 8,
wherein the first port (32) of the 3-way fluid valve (30) is connected to the input pipe (18) through a first section (20a) of the first connecting pipe (20),
wherein the second port (33) of the 3-way fluid valve (30) is connected to the output pipe (19) through a second section (20b) of the first connecting pipe (20), and
wherein the third port (34) of the 3-way fluid valve (30) is connected to the siphon or trap (22) through the second connecting pipe (21).

13. Water heater of claim 12, wherein the 3-way fluid valve (30) is configured to
guide water heated by heat exchanger (17) from the output pipe (19) in which the second pressure is present to the siphon or trap (22) at which the third pressure is present, and
guide water not heated by the heat exchanger (17) from the output pipe (19) in which the second pressure is present to the siphon or trap (22) at which the third pressure is present, and
guide water not heated by the heat exchanger (17) from the input pipe (18) in which the first pressure is present to the output pipe (19) in which the second pressure is present.

14. Water heater of claim 12 or 13, **characterized in that**
the gas burner (11) comprises a burner chamber (12),
the heat exchanger (17) is positioned inside the burner chamber (12) of the gas burner (11),
the siphon or trap (22) is positioned outside of the burner chamber (12) of the gas burner (11).

15. Method to operate a water heater according to claim 12, 13 or 14, wherein
the 3-way fluid valve (30) is transferred into the first state if no fluid flow through the same is wanted,
the 3-way fluid valve (30) is transferred into the second state if fluid flow from the output pipe (19) to the siphon or trap (22) is wanted,
the 3-way fluid valve (30) is transferred into the third state if fluid flow from the input pipe (18) to output pipe (19) is wanted.
